# EUROPEAN PATENT APPLICATION

(11) **EP 2 254 042 A1**
(43) Date of publication of application: **24.11.2010**
(21) Application number: 10162813.9
(22) Date of filing: 14.05.2010
(51) Int. Cl.: G06F 9/44, G06F 9/46

(54) **Method and apparatus for controlling content**

(30) Priority: 15.05.2009 KR 20090042831
(71) Applicant: Samsung Electronics Co., Ltd., Yeongtong-gu Suwon-si, Gyeonggi-do (KR)
(72) Inventor: Jang, Jun-ho, Gyeonggi-do (KR); Kim, Jung-jin, Gyeonggi-do (KR); Jun, Hae-sik, Seoul (KR); Kim, Young-suk, Gyeonggi-do (KR)
(74) Representative: Jenkins, Richard Gavin

(57) **Abstract**

Provided are a method and apparatus for controlling content. The method includes generating a user event corresponding to user input required for controlling the content when the user input is received, obtaining information regarding an application intended to process the user event, and generating user event scenario information into which the information regarding the application and information regarding the user event are combined. The apparatus includes a user event generator, an information obtaining unit, and an information generator.

## Description

### CROSS-REFERENCE TO RELATED PATENT APPLICATION

This application claims priority from Korean Patent Application No. 10-2009-0042831, filed on May 15, 2009, in the Korean Intellectual Property Office, the disclosure of which is incorporated herein in its entirety by reference.

### BACKGROUND

### 1. Field

Methods and apparatuses consistent with the present inventive concept relate to controlling content, and more particularly, although not exclusively, to controlling content using an application.

### 2. Description of the Related Art

The development of information and communication technology has led to an increase in use of high-definition, high-capacity contents. High-capacity storage media are required to store high-definition, high-capacity contents, and digital versatile discs (DVDs) or Blu-ray discs (BDs) are being highlighted as the high-capacity storage media.

Among the high-capacity storage media, a BD may include an application manufactured using the Java language (or Java application) and control reproduction of contents using the Java application, unlike a DVD. The Java application may provide various functions to users. For example, a BD may provide a network function called BD-Live using the Java application. The BD-Live function may allow contents on a BD to be additionally updated so that sub-titles may be added or various trailer information including additional services may be provided.

### SUMMARY

It is an aim of certain embodiments of the invention to solve, mitigate or obviate, at least partly, at least one of the problems and/or disadvantages associated with the prior art. Certain embodiments aim to provide at least one of the advantages described below.

Exemplary embodiments of the present inventive concept provide a method and apparatus for controlling content using an application.

According to one aspect of the present invention, there is provided a method of controlling a content using an application by generating a user event corresponding to user input required for controlling the content when the user input is received; obtaining information regarding an application intended to process the user event; and generating user event scenario information into which the information regarding the application and information regarding the user event are combined.

The information regarding the application may have at least one of application identification information used for identifying the application and application state information indicating a state in which the application is capable of processing the user event.

The generation of the user event may include generating a plurality of user events in response to sequential user input required for controlling the content, and the user event scenario information may include an index number indicating the order of generation of the plurality of user events.

The user event scenario information may include delay time information indicating a difference in generation time point between a first user event generated at the present time point and a second user event generated at the previous time point among the plurality of user events.

According to another aspect of the present invention, there is provided a method of controlling a content using an application by obtaining user event scenario information into which information regarding a user event required for controlling the content and information regarding an application intended to process the user event are combined; and generating the user event based on the user event scenario information.

The information regarding the application may have at least one of application identification information used for identifying the application and application state information indicating a state where the application is capable of processing the user event. The generation of the user event may include: determining whether or not the application is in such a state as to be capable of processing the user event; and generating the user event when it is determined that the user event is in such a state as to be capable of processing the user event.

The user event scenario information may include information regarding a plurality of user events generated sequentially to control the content.

Another aspect of the present invention provides a method of controlling content, that includes generating a user event corresponding to user input; obtaining information regarding an application intended to process the user event; generating user event scenario information based on a combination of the user event and the information regarding the application; and repeating the user event based only on the user event scenario information without an additional user input.

Another aspect of the present invention provides content control apparatus that includes an information obtaining unit configured to obtain user event scenario information that includes a plurality of user events corresponding to user input; and a user event generator configured to generate the user events based on the user event scenario information, wherein the user event generator includes a determiner which determines whether an application for processing the user events is in an active state and a generator which sequentially generates the user events based only on the event scenario information without an additional user input.
Another aspect of the invention provides a computer program comprising instructions arranged, when executed, to implement a method and/or apparatus in accordance with any one of the above-described aspects. A further aspect provides machine-readable storage storing such a program.

### BRIEF DESCRIPTION OF THE DRAWINGS

The above and other aspects of the present invention will become more apparent by describing in detail embodiments thereof with reference to the attached drawings in which:

FIG. 1 is a block diagram of a content control apparatus according to an exemplary embodiment;

FIG. 2 is a block diagram of a content control apparatus according to another exemplary embodiment;

FIG. 3 is a flowchart illustrating generation and application of user event scenario information according to an exemplary embodiment;

FIG. 4 is a flowchart of an example of a process of generating a user event using selected scenario information of FIG. 3, according to an exemplary embodiment;

FIG. 5 is a block diagram of a content control apparatus according to another exemplary embodiment;

FIG. 6 illustrates a menu tree of a Blu-ray disc (BD) according to an exemplary embodiment;

FIG. 7 illustrates an example of user event scenario information generated in response to user input in FIG. 6;

FIG. 8 is a flowchart illustrating a method of controlling content, according to an exemplary embodiment; and

FIG. 9 is a flowchart illustrating a method of controlling content, according to another exemplary embodiment.

### DETAILED DESCRIPTION

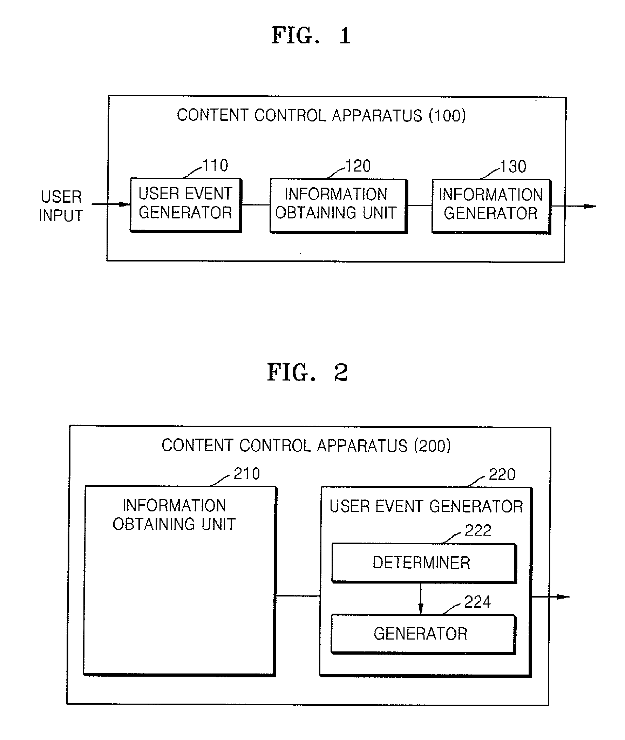

FIG. 1 is a block diagram of a content control apparatus 100 according to an exemplary embodiment.

The content control apparatus 100, which may control contents using an application, may include a user event generator 110, an information obtaining unit 120, and an information generator 130.

The content control apparatus 100 may be applied to various fields. For example, the content control apparatus 100 may be used to control (e.g., reproduce or downward) contents using an application written to a Blu-ray disc (BD).

The user event generator 110 may generate a user event in response to user input required for controlling the content when the user input is received. In the present specification, a signal generated in response to the user input may be called a user event. Thus, when the user input is received through an interface, such as a keyboard, a mouse, or a remote controller, the user event generator 110 may generate the user event.

The information obtaining unit 120 may obtain information regarding the application intended to process the generated user event. The information regarding the application may include at least one of application identification information and application state information.

The application identification information may be any form of information used for identifying the application intended to process the generated user event.

The application state information may be information indicating a state where the application is capable of processing the user event. In other words, the application state information may indicate a state where the application is appropriate for processing the user event.

According to the exemplary embodiment, the state of the application may be variously classified.

For example, the state of the application may be classified into an unloaded state, a loaded state, and an active state. When the application is in the unloaded state, the application may not be activated so that even if the user event occurs, the application cannot process the user event. When the application is in the loaded state, the application may be initialized so that the application may or may not process the user event depending on the type of the user event. Finally, when the application is in the active state, the application may be completely activated and process the user event. In other words, the application may process the user event only in the loaded or active state. As described later, the information generator 130 may generate user event scenario information including the application state information so that the user event can be generated at an appropriate time point.

The application information may further include an index number, delay time information, and application event information. Although there are cases where a user may control the content by a one-time user input as the user wants, there are cases where the user may control the content by several user inputs as the user wants. In the former case, one user event may occur, while in the latter case, a plurality of user events may occur.

The index number may be information indicating the order of generation of a plurality of user events when the plurality of user events are generated.

The delay time information may be information indicating a difference in generation time between a plurality of user events when the plurality of user events are generated. For example, it is assumed that a first user event occurs at the present time point, and a second user event occurred one second ago. In this case, delay time information indicating a delay time of one second may be inserted into information regarding the first user event so it can be seen that the first user event occurs one second after the second user event occurred. As described above, the application information may include any information related with the application. Also, the form of the application information is not limited to the forms described above.

The application event information may be information regarding a second application when a result obtained by processing the user event using a first application is used by the second application. The application event information may include identification information and state information of the second application that uses the user-event processing result.

The information generator 130 may generate user event scenario information into which the application information and the user event information are combined. When a plurality of user inputs are generated in response to sequential user inputs required for controlling the content, the user event scenario information may include information regarding each of a plurality of user events.

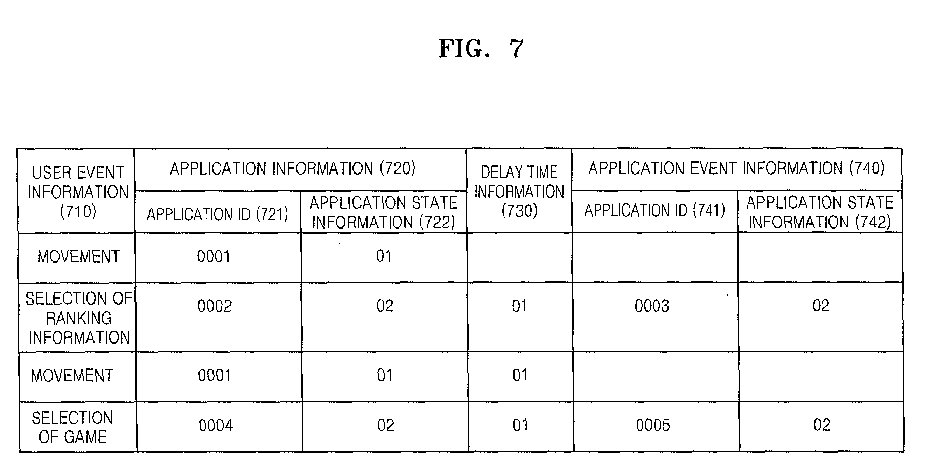

A user may designate a user event to be included in the user event scenario information. For example, when the user designates an initial user event and a final user event that are intended to be included in the user event scenario information, all user events generated between the initial and final user events may be included in the user event scenario information. As another example, all user events generated from a time point when a disc is inserted into a player to a time point when the disc is ejected from the player may be included in the user event scenario information. An example of user event scenario information will be described later with reference to FIG. 7.

The generated user event scenario information may be stored in a storage space of the player configured to operate a BD.

FIG. 2 is a block diagram of a content control apparatus 200 according to another exemplary embodiment.

The content control apparatus 200 according to the present embodiment may include an information obtaining unit 210 and a user event generator 220.

The information obtaining unit 210 may obtain user event scenario information (hereinafter referred to as 'scenario information'). The scenario information may be information written about manipulation performed by a user in the past to control the content. For example, the scenario information may include information into which information regarding a user event generated at a time point to control the content and information regarding an application intended to process the user event are combined.

The information regarding the application may include at least one of application identification information used for identifying the application and application state information indicating a state where the application is capable of processing the user event.

The scenario information may further include the index number indicating the order of generation of user events. In particular, when the scenario information includes information regarding a plurality of user events, the index number may indicate the order of generation of the user events.

In addition, the scenario information may further include the delay time information. The delay time information may indicate a difference in generation time between adjacent user events. Assuming that a user event to be generated at the next time point is a first user event and a user event generated before is a second user event, the delay time information may include a time difference between the time point at which the first user event is to be generated and the time point at which the second user event is generated.

The user event generator 220 may generate the user event based on the scenario information. The user event generator 220 may include a determiner 222 and a generator 224.

The determiner 222 may determine whether or not the application is in such a state as to be capable of processing the user event based on the application information. For example, assuming that the corresponding user event may be processed only when the application is in an active state, the determiner 222 may determine whether or not the application intended to process the user event is in the active state.

When it is determined that the application is in such a state as to be capable of processing the user event, the generator 224 may generate the user event. The scenario information may include information regarding each of a plurality of user events generated sequentially to control the content. In this case, the scenario information may further include the index number.

When the scenario information includes the index number, the generator 224 may sequentially generate the plurality of user events based on the index number.

Also, when the scenario information includes the delay time information, the generator 224 may generate the next user event after a predetermined time has elapsed from a time point when the previous user event was generated.

The above-described scenario information may be obtained by the information obtaining unit 210 the instant the user inserts a BD in which the content and the application are written to a player or when a user's request is received. When the scenario information is obtained, the user event generator 220 may automatically generate the user events based on the scenario information until a stop request is received from the user or the BD is removed from the player.

A user may frequently use preferred functions of contents. However, in the conventional case, the user may have to manipulate user interfaces several times to enter the preferred functions. In particular, even if the user intends to use the same function twice or more in succession, the user may have to manipulate the user interface each time.

However, according to the exemplary embodiment, information regarding a user event generated in response to user input and information regarding an application intended to process the user event may be combined to generate user event scenario information, and the user may use a desired function using the user event scenario information without an additional user input.

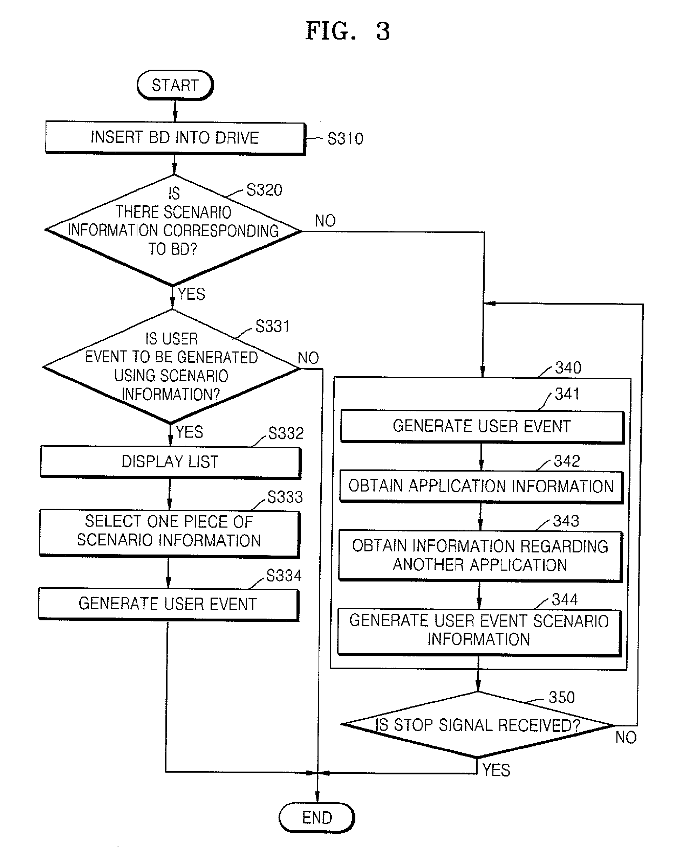

FIG. 3 is a flowchart illustrating generation and application of user event scenario information according to an exemplary embodiment.

In operation S310, a user may insert a BD into a player.

In operation S320, it may be determined whether or not there is scenario information corresponding to the inserted disc based on disc information. The disc information may include a disc identifier (ID) for identifying a disc. The scenario information may be classified according to the disc ID and stored so that it may be easily determined whether or not the inserted disc includes the corresponding scenario information. According to exemplary embodiments, the scenario information may be classified according to a content provider instead of the disc ID and then stored. In view of the fact that discs produced by the same content provider typically have similar structures, the discs produced by the same content provider may use the same scenario information. For example, it is assumed that discs produced by the same content provider are configured to reproduce five trailer images before movie contents are reproduced. Also, it is assumed that the scenario information includes information regarding a user event to skip a trailer image. In this case, the user may skip the trailer image using the break information when reproducing a disc produced by the same content provider.

When there is scenario information corresponding to the inserted disc, the process may enter operation S331. When there is no scenario information corresponding to the inserted disc, the process may enter operation S341.

In operation S331, it may be determined whether or not the user event is to be generated using the scenario information. Operation S331 may include asking a user if the user wants to use the scenario information and receiving an answer from the user.

If the scenario information is used, operation S332 may be performed to display a list including at least one piece of the scenario information. Otherwise, if the scenario information is not used, the process may end without performing subsequent operations. In this case, when user input is received from the user, a user event may be generated in response to the user input.

In operation S333, one piece of information may be selected out of the scenario information included in the list. When a plurality of pieces of scenario information are included in the list, one piece of scenario information may be selected out of the plurality of pieces of scenario information based on the user input.

In operation S334, a user event may be generated using the selected scenario information. In this case, the user event included in the scenario information may be continuously generated until a stop request is received from the user. A detailed description of operation S334 will be described later.

In operation S340, user event scenario information may be generated. Operation S340 may include operations S341 through S344.

In operation S341, when user input is received, a user event corresponding to the user input may be generated.

In operation S342, information regarding an application intended to process the user event may be obtained. The application information may include at least one of application identification information used for identifying the application and application state information indicating a state where the application is capable of processing the user event.

In operation S343, when a result obtained by processing the user event using a first application is employed by a second application, information regarding the second application that employs the result may be obtained. For example, it is assumed that when a first application may process a user event related with selection of a menu and produce a result 'A', a second application outputs a sound corresponding to the selection of the menu using the result 'A'. In operation S342, information regarding a state where the first application is capable of processing the user event may be obtained, and in operation S342, information regarding a state where the second application is capable of processing the user event may be obtained. When the user-event processing result of an application is not required by another application, operation S343 may be omitted.

In operation S344, the user event information and the application information may be combined to generate the user event scenario information. In this case, the user event scenario information may include an index number indicating the order of generation of user events and delay time information indicating a difference in generation time point between adjacent user events.

In operation S350, it may be determined whether or not a signal to stop generating the user event scenario information is received. The signal to stop generating the user event scenario information may be generated when the BD is removed from the player or the user requests to stop the process.

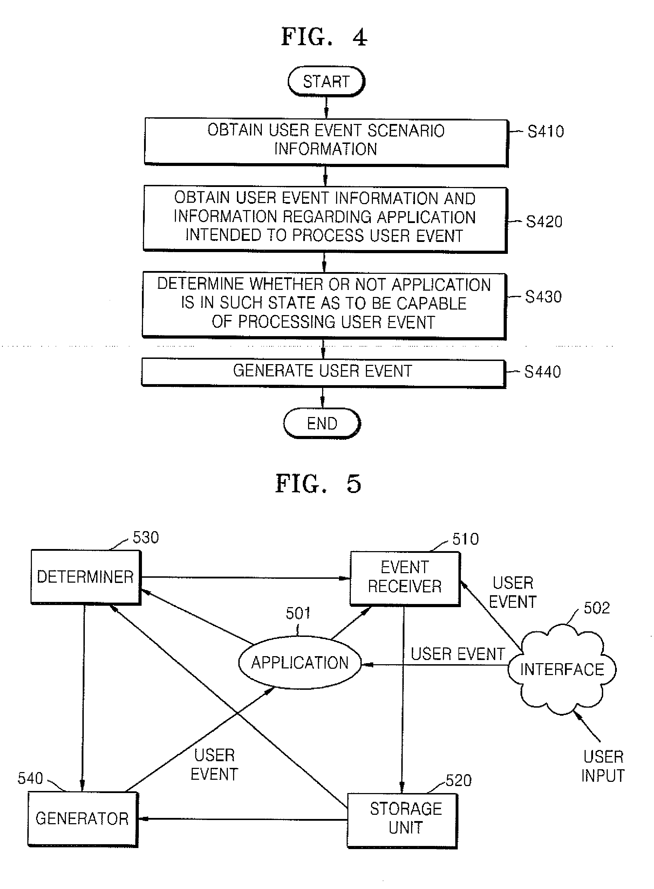

FIG. 4 is a flowchart illustrating an example of operation S334 of FIG. 3, according to an exemplary embodiment.

In operation S410, user event scenario information may be obtained. The user event scenario information may be written to a player configured to drive a disc.

In operation S420, information regarding the next user event and information regarding an application intended to process the user event may be obtained based on the index number included in the user event scenario information.

In operation S430, it may be determined whether or not the application is in such a state as to be capable of processing the user event based on the application information included in the user event scenario information.

If it is determined that the application is not in such a state as to be capable of processing the user event, operation S430 may be performed again. Conversely, if it is determined that the application is in such a state as to be capable of processing the user event, the process may enter operation S440.

In operation S440, the user event may be generated. When delay time information is included in the user event scenario information, the next user event may be generated after a predetermined delay time has elapsed from a time point when the previous user event is generated.

FIG. 5 is a block diagram of a content control apparatus 500 according to another exemplary embodiment.

The content control apparatus 500 may include an event receiver 510, a storage unit 520, a determiner 530, and a generator 540. An application 501 of FIG. 5 may receive and process a user event, and it is assumed that the application 501 is stored in a BD.

The event receiver 510 may receive a user event generated in response to user input. Also, the event receiver 510 may receive an application event, which is a result obtained by processing the user event using the application 501.

The storage unit 520 may store user event information and application information.

The determiner 530 may determine whether or not the application 501 is in such a state as to be capable of processing the user event using the application information stored in the storage unit 520. If it is determined that the application 501 is in such a state as to be capable of processing the user event, the determiner 530 may control the generator 540, which will be described later, to generate the user event.

The generator 540 may generate the user event based on the user event information stored in the storage unit 520. In the present embodiment, the generator 540 may generate the user event under the control of the determiner 530. It is assumed that the generator 540 is embodied by a module other than an interface configured to receive the user input and generates the user event in response to the user input. However, according to another exemplary embodiment, the generator 540 and the interface may be embodied by a single module.

Hereinafter, the operation of the content control apparatus 500 will be described.

For brevity, the operation of the content control apparatus 500 will be divided into a process of generating user event scenario information and a process of controlling content using the user event scenario information.

To begin, the process of generating the user event scenario information in the content control apparatus 500 will be described.

When the interface 502 receives user input, the interface 502 may generate a user event in response to the user input and transmit the user event to the application 501 and the event receiver 510. In this case, the application 501 should be in such a state as to be capable of processing the user event.

Next, the event receiver 510 may transmit information regarding the user event and information regarding the application 501 to the storage unit 520.

The storage unit 520 may combine the information regarding the user event and the information regarding the application 501 and generate user event scenario information. In this case, the information regarding the application 501 may include application identification information and application state information indicating a state where the application 501 is capable of processing the user event. Also, the storage unit 520 may combine information regarding an inserted BD and the user event scenario information and store the combined information and indicate which BD the user event scenario information may correspond to.

Afterwards, the information regarding the user event may be included in the user event scenario information along with the application information and stored until the user stops generating the user event scenario information or removes a BD from a player.

Hereinafter, a process of controlling the content using the user event scenario information will be described.

When a user inserts a BD into a player or requests to use the user event scenario information, the determiner 530 may obtain the user event scenario information stored in the storage unit 520. In this case, the determiner 530 may obtain disc information from the inserted BD, so that the determiner 530 may obtain the user event scenario information corresponding to the inserted BD.

Next, the determiner 530 may obtain application (501) information included in the user event scenario information. As described above, the application (501) information may include an index number, application identification information, and application state information. The determiner 530 may determine the next user event and an application intended to process the user event, based on the index number.

Also, the determiner 530 may confirm the present state of the application 501 intended to process the user event. Next, the determiner 530 may compare the application state information with the confirmed present state of the application 501 and determine whether or not the application 501 is capable of processing the user event in the present state.

If it is determined that the application 501 is capable of processing the user event in the present state, the determiner 530 may control the generator 540 to generate the user event. The generator 540 may receive user event scenario information from the storage unit 520 and generate the user event based on the user event information included in the user event scenario information.

The above-described operation may be repeated until all user events included in the user event scenario information are generated, the user stops using the user event scenario information, or the BD is removed from the player.

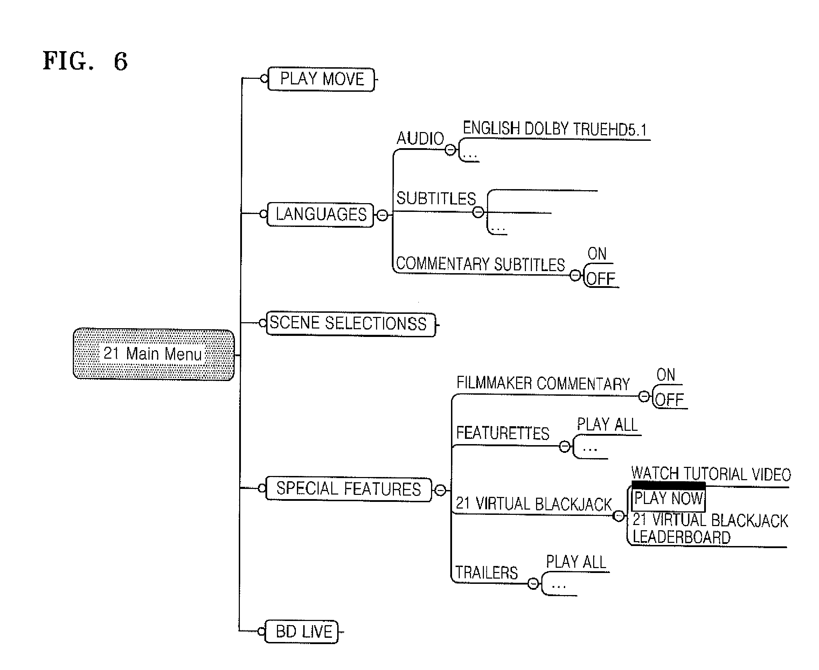

FIG. 6 is a diagram of a menu tree of a BD, according to an exemplary embodiment.

In FIG. 6, after a user selects an item '21 VIRTUAL BLACKJACK LEADERBOARD' to confirm ranking, the user may intend to select an item 'PLAY NOW' to execute a blackjack game. In FIG. 6, it is assumed that a movement between items disposed at the same level is performed using left and right keys of a remote controller, and a movement between items disposed at different levels is performed using up and down keys thereof. Also, it is assumed that a highlight is initially positioned at the uppermost item within the same level. However, according to another exemplary embodiment, a movement between items disposed at the same level may be performed using up and down keys of a remote controller, a movement between items disposed at different levels may be performed using left and right keys thereof, and a highlight may be positioned at the lowermost item within the same level.

To begin, a user may press the 'right' key three times. When the highlight is positioned at an item 'SPECIAL FEATURE', the user may press the 'selection' key. Next, the user may press the 'right' key twice. When the highlight is positioned at the item '21 VIRTUAL BLACKJACK', the user may press the 'selection' key. After that, the user may press the 'right' key twice. When the highlight is positioned at the item '21 VIRTUAL BLACKJACK LEADERBOARD', the user may press the 'selection' key to conform ranking. An application configured to provide a BD-Live function may receive ranking information via a network.

Finally, the user may press the 'left' key. After that, when the highlight is positioned at the item 'PLAY NOW', the user may press the 'selection' key to start the game. As described above, the user may have only to perform several inputs to control a desired content. Particularly, since a BD content is controlled using the application, it is difficult to directly provide a function required by the user. This is because a required application should be driven using user events in order to provide the corresponding function.

Supposing that the user confirms ranking once more and executes the blackjack game, conventionally, the user had to repeat the foregoing process again. However, in a content control apparatus according to an exemplary embodiment, user event scenario information into which information regarding the user event generated according to user input and information regarding the application are combined may be generated, the content control apparatus may control the content using the user event scenario information. Accordingly, the user may control the content as the user wants without user input. In other words, after confirming the ranking, the user may execute the blackjack game without delay

FIG. 7 is a diagram of an example of user event scenario information generated by user input of FIG. 6.

A user event information item 710 may indicate information regarding a user event generated in response to user input. Referring to FIG. 6, a user moved to an item '21 VIRTUAL BLACKJACK LEADERBOARD', which provides ranking information, using a direction key and a selection key. The user event may be generated each time the user inputs the direction key or the selection key. However, it is assumed here for brevity that only one user event is generated while the user is manipulating the direction key or the selection key to move a highlight to the item'21 VIRTUAL BLACKJACK LEADERBOARD'.

An application information item 720 may include information regarding an application intended to process the user event. The application information item 720 may include an application ID item 721 and an application state information item 722.

The application ID item 721 may be information used for identifying the application intended to process the user event.

The application state information item 722 may indicate a state where the application is capable of processing the user event.

A delay time information item 730 may indicate a time difference between the previous user event and the next user event.

An application event information item 740 may be information regarding other applications configured to receive a result obtained by processing the user event. The application event information item 740 may include an application ID item 741 and an application state information item 742.

Hereinafter, a case where a user clicks the 'selection' key when the highlight is positioned at the item'21 VIRTUAL BLACKJACK LEADERBOARD' will be described.

When the user clicks the 'selection' key, a user event corresponding to the user input may be generated. Referring to FIG. 7, a user event indicated by 'selection of ranking information' may be generated.

The generated user event may be processed by an application having an ID '0002', and it can be seen that the application having the ID '0002' is capable of processing the user event in an 'active state'. Also, since a delay time information item indicates '1' second, it can be seen that a user event corresponding to the 'selection of ranking information' is generated within '1' second after a user event corresponding to 'movement' is generated. Accordingly, the application having the ID '0002' may be in the 'active state', and the user event corresponding to the 'selection of ranking information' may be generated within '1' second after the user event corresponding to 'movement' is generated.

When the application having the ID '0002' processes the user event corresponding to ' selection of ranking information', a processing result may be transmitted to an application having an ID '0003'. The application having the ID '0003' also may process the user event in the 'active state'.

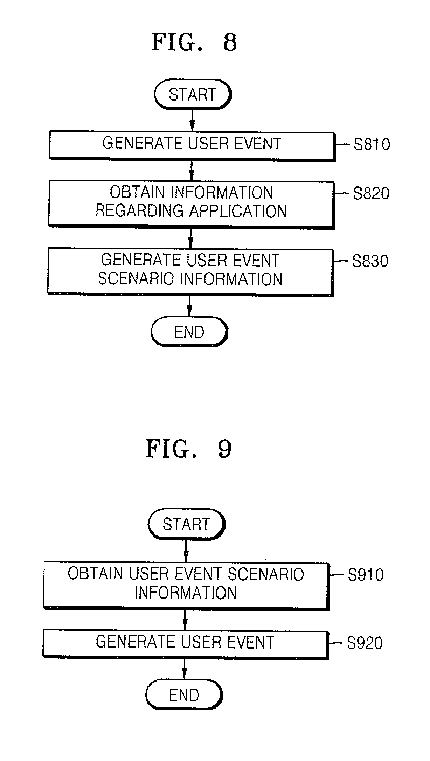

FIG. 8 is a flowchart illustrating a method of controlling content, according to an exemplary embodiment.

In operation S810, when user input required for controlling the content is received, a user event may be generated in response to the user input.

In operation S820, information regarding an application intended to process the user event may be obtained.

The information regarding the application may include at least one of application identification information used for identifying the application and application state information indicating a state in which the application is capable of processing the user event.

Also, the user event scenario information may further include delay time information indicating a difference in generation time point between a first user event generated at the present time point and a second user event generated at the previous time point among a plurality of user events.

In operation S830, user event scenario information into which the information regarding the application and information regarding the user event are combined may be generated. The generated user event scenario information may be stored in a storage space of a player.

FIG. 9 is a flowchart illustrating a method of controlling content, according to another exemplary embodiment.

In operation S910, user event scenario information into which information regarding a user event used for controlling the content and information regarding an application intended to process the user event are combined may be obtained.

In operation S920, a user event may be generated based on the user event scenario information. Specifically, it is determined whether an application is in such a state as to be capable of processing the user event based on the application information. If it is determined that the application is in such a state as to be capable of processing the user event, the user event may be generated.

When the user event scenario information includes an index number indicating the order of generation of a plurality of user events, the plurality of user events may be sequentially generated based on the index number. Also, when the user event scenario information includes delay time information, after a predetermined time has elapsed from a time point when the previous user event occurred, the next user event may be generated.

The exemplary embodiments can be written as computer programs and can be implemented in general-use digital computers that execute the programs using a computer readable recording medium. Examples of the computer readable recording medium include magnetic storage media (e.g., ROM, floppy discs, hard discs, etc.), optical recording media (e.g., CD-ROMs, or DVDs), and storage media (e.g., transmission through the Internet).
It will be appreciated that embodiments of the present invention can be realized in the form of hardware, software or a combination of hardware and software. Any such software may be stored in the form of volatile or non-volatile storage such as, for example, a storage device like a ROM, whether erasable or rewritable or not, or in the form of memory such as, for example, RAM, memory chips, device or integrated circuits or on an optically or magnetically readable medium such as, for example, a CD, DVD, magnetic disk or magnetic tape or the like. It will be appreciated that the storage devices and storage media are embodiments of machine-readable storage that are suitable for storing a program or programs comprising instructions that, when executed, implement embodiments of the present invention. Accordingly, embodiments provide a program comprising code for implementing apparatus or a method as claimed in any one of the claims of this specification and a machine-readable storage storing such a program. Still further, such programs may be conveyed electronically via any medium such as a communication signal carried over a wired or wireless connection and embodiments suitably encompass the same.
Throughout the description and claims of this specification, the words "comprise" and "contain" and variations of the words, for example "comprising" and "comprises", means "including but not limited to", and is not intended to (and does not) exclude other moieties, additives, components, integers or steps.
Throughout the description and claims of this specification, the singular encompasses the plural unless the context otherwise requires. In particular, where the indefinite article is used, the specification is to be understood as contemplating plurality as well as singularity, unless the context requires otherwise.
Features, integers, characteristics, compounds, chemical moieties or groups described in conjunction with a particular aspect, embodiment or example of the invention are to be understood to be applicable to any other aspect, embodiment or example described herein unless incompatible therewith.
It will be also be appreciated that, throughout the description and claims of this specification, language in the general form of "X for Y" (where Y is some action, activity or step and X is some means for carrying out that action, activity or step) encompasses means X adapted or arranged specifically, but not exclusively, to do Y.

While the present inventive concept has been particularly shown and described with reference to the exemplary embodiments thereof, it will be understood by those of ordinary skill in the art that various changes in form and details may be made therein without departing from the scope of the invention as defined by the appended claims. The exemplary embodiments should be considered in descriptive sense only and not for purposes of limitation. Therefore, the scope of the invention is defined not by the detailed description but by the appended claims, and all differences within the scope will be construed as being included in the present invention.

## Claims

1. A method of controlling content using an application, the method comprising:
obtaining user event scenario information into which information regarding a user event required for controlling the content and information regarding an application intended to process the user event are combined; and
generating a user event based on the user event scenario information.

2. The method of claim 1, wherein the information regarding the application includes at least one of application identification information used for identifying the application and application state information indicating whether the application is in a state capable of processing the user event, and wherein
the generating of the user event comprises: determining whether or not the application is in a state capable of processing the user event; and
generating the user event when it is determined that the user event is in a state capable of processing the user event.

3. The method of claim 1 or claim 2, wherein the user event scenario information includes information regarding a plurality of user events generated sequentially to control the content.

4. The method of claim 3, wherein the user event scenario information further includes an index number indicating the order of generation of the plurality of user events,
wherein the generating of the user events comprises sequentially generating the plurality of user events based on the index number.

5. The method of claim 3 or claim 4, wherein the user event scenario information further includes delay time information indicating a difference in generation time point between a first user event to be generated at the next time point and a second user event generated at the previous time point among the plurality of user events,
wherein the generating of the user events includes generating the second user event after a predetermined time has elapsed from a time point when the first user event was generated, based on the delay time information.

6. The method of any preceding claim, wherein the application includes a Java application written to a Blu-ray disc (BD).

7. A content control apparatus adapted to use an application, the apparatus comprising:
an information obtaining unit configured to obtain user event scenario information into which information regarding a user event required for controlling the content and information regarding an application intended to process the user event are combined; and
a user event generator configured to generate a user event based on the user event scenario information.

8. The apparatus of claim 7, wherein the information regarding the application includes at least one of application identification information used for identifying the application and application state information indicating whether the application is in a state capable of processing the user event,
wherein the user event generator comprises:
a determiner configured to determine whether or not the application is in a state capable of processing the user event based on the information regarding the application; and
a generator configured to generate the user event when it is determined that the application is in a state to process the user event.

9. The apparatus of claim 7 or claim 8, wherein the user event scenario information includes information regarding a plurality of user events generated sequentially to control the content.

10. The apparatus of claim 9, wherein the user event scenario information further includes an index number indicating the order of generation of the plurality of user events, and
wherein the generator is configured to sequentially generate the plurality of user events based on the index number.

11. The apparatus of claim 9 or claim 10, wherein the user event scenario information further includes delay time information indicating a difference in generation time point between a first user event to be generated at the next time point and a second user event generated at the previous time point among the plurality of user events, and
wherein the generator is configured to generate the second user event after a predetermined time has elapsed from a time point when the first user event was generated, based on the delay time information.

12. The apparatus of any one of claims 7 to 11, wherein the application includes a Java application written to a Blu-ray disc (BD).

13. A computer-readable medium having embodied thereon a computer program for executing the method of any one of claims 1 through 6.

14. A computer program comprising instructions arranged, when executed, to implement a method and/or apparatus in accordance with any one of claims 1 to 12.

15. Machine-readable storage storing a program in accordance with claim 14.
